# EUROPEAN PATENT APPLICATION

(11) **EP 4 603 797 A1**
(43) Date of publication of application: **20.08.2025**
(21) Application number: 23876950.9
(22) Date of filing: 19.06.2023
(51) Int. Cl.: G01C 3/06, A63B 71/06

(54) **DISTANCE MEASUREMENT DEVICE AND PROGRAM**

(30) Priority: 11.10.2022 JP 2022162966
(71) Applicant: Asahi Golf Co., Ltd., Kobe-shi, Hyogo 654-0161 (JP)
(72) Inventor: UCHIMOTO, Hiroshi, Kobe-shi, Hyogo 654-0161 (JP); YANASE, Chihiro, Kobe-shi, Hyogo 654-0161 (JP); OKADA, Eisuke, Kobe-shi, Hyogo 654-0161 (JP); HASHIMOTO, Takanori, Kobe-shi, Hyogo 654-0161 (JP)
(74) Representative: Müller-Boré & Partner Patentanwälte PartG mbB
(86) International application number: PCT/JP2023/022572
(87) International publication number: WO 2024/079941

(57) **Abstract**

A distance measurement device 1 has: a storage unit 15 for storing a reference position within a golf course green; a current location identification unit 161 for identifying the current location of the distance measurement device; a measurement unit 162 for measuring the distance from the current location to a measurement target, and the direction of the measurement target relative to the current location; a measurement target location identification unit 163 for identifying the measurement target location, which is the location of the measurement target, on the basis of the current location and the distance and direction measured by the measurement unit; and a display processing unit 165 which displays the reference position and an edge line of the green on a display unit 14 when the measurement unit 162 has not identified the measurement target location or when the measurement target location does not fall within a prescribed range which corresponds to the reference position, and displays the measurement target location and the green edge line on the display unit 14 when the measurement target location falls within the prescribed range which corresponds to the reference position.

## Description

### TECHNICAL FIELD

The present invention relates to a distance measurement device and a program to be used in a golf club.

### BACKGROUND OF THE INVENTION

Conventionally, devices that display the position of a pin on the green of a golf course have been known (see, for example, Patent Document 1).

### PRIOR ART

### PATENT DOCUMENT

[Patent Document 1] Japanese Patent No. 7062329

### SUMMARY OF INVENTION

### PROBLEMS TO BE SOLVED BY THE INVENTION

In golf courses, pin positions change from day to day. The device described in Patent Document 1 displays the pin positions by receiving data indicating the pin positions for the day from the golf course's computer. However, if the data indicating the pin positions for the day cannot be obtained from the golf course's computer, a problem occurs in that the pin position of the pin cannot be displayed.

The present invention has been made in view of this issue, and its object is to provide a distance measurement device that can display pin positions even when data indicating the pin positions for the day cannot be obtained from the golf club's computer.

### MEANS FOR SOLVING THE PROBLEM

A distance measurement device according to a first aspect of the present invention is a distance measurement device to be used in a golf course, including: a storage unit that stores a reference position within a green of a golf course; a current position identifying unit that identifies a current position of the distance measurement device; a measuring unit that measures a distance from the current position to a measurement target and a direction of the measurement target with respect to the current position; a measurement target position identifying unit that identifies a measurement target position, which is a position of the measurement target, on the basis of (i) the current position and (ii) the distance and the direction measured by the measuring unit; and a display processing unit that causes a display unit to display the reference position and an edge line of the green when the measuring unit has not identified the measurement target position or when the measurement target position is not within a predetermined range corresponding to the reference position, and causes the display unit to display the measurement target position and the edge line of the green when the measurement target position is within the predetermined range corresponding to the reference position.

The display processing unit may cause the display unit to display the reference position as a pin position when the measurement target position is not within the predetermined range, and cause the display unit to display the measurement target position as the pin position when the measurement target position is within the predetermined range.

The display processing unit may cause the display unit to display a distance from the current position to the measurement target position and a distance to a position where a straight line connecting the current position and the measurement target position intersects an edge line of the green.

The storage unit may further store tee position information indicating locations of teeing areas of a plurality of greens, and the display processing unit may cause the display unit to display the reference position as a pin position when the current position is within a predetermined range from the location of the teeing area and the measuring unit has not identified the measurement target position.

The display processing unit may store the measurement target position in the storage unit when the measurement target position is within a predetermined range, and cause the display unit to display the measurement target position as a pin position after storing the measurement target position in the storage unit.

The storage unit may store hole range data indicating an area of each hole in association with a hole number, and the display processing unit may store the measurement target position in the storage unit in association with the hole number, and cause the display unit to display the measurement target position corresponding to the hole number including the current position as a pin position after storing the measurement target position in the storage unit, by referencing the hole range data.

The distance measurement device may further include an operation accepting unit that accepts a user's operation, wherein the display processing unit may cause the display unit to display the measurement target position stored in the storage unit as a pin position when the operation accepting unit accepts a first operation, and cause the display unit to display the measurement target position which is identified by the measurement target position identifying unit after the measuring unit is caused to perform the measurement, when the operation accepting unit accepts a second operation.

The display processing unit may update the measurement target position stored in the storage unit in a case where the measurement target position identified by the measurement target position identifying unit is within the predetermined range from the reference position, when the operation accepting unit accepts the second operation.

A program according to a second aspect of the present invention causes a processor included in a distance measurement device to function as: a current position identifying unit that identifies a current position of the distance measurement device; a measuring unit that measures a distance from the current position to a measurement target and a direction of the measurement target with respect to the current position; a measurement target position identifying unit that identifies a measurement target position, which is a position of the measurement target, on the basis of (i) the current position and (ii) the distance and the direction measured by the measuring unit; and a display processing unit that causes a display unit to display the reference position and an edge line of the green when the measuring unit has not identified the measurement target position or when the measurement target position is not within a predetermined range corresponding to the reference position, and causes the display unit to display the measurement target position and the edge line of the green when the measurement target position is within the predetermined range corresponding to the reference position.

### EFFECT OF THE INVENTION

According to the present invention, an effect is achieved that displayed pin positions can be displayed even when data indicating the pin positions for the day cannot be obtained from a golf course's computer.

### BRIEF DESCRIPTION OF THE DRAWINGS

FIG. 1 is a diagram illustrating an overview of a distance measurement device 1.
FIG. 2 is a diagram illustrating an example of a screen displayed on a display included in the distance measurement device 1.
FIG. 3 is a diagram illustrating a configuration of the distance measurement device 1.
FIG. 4 is a diagram illustrating an example of reference position information.
FIG. 5 is a diagram illustrating an example of reference information.
FIG. 6 is a diagram for explaining a method in which a measurement target position identifying unit 163 identifies a position of a measurement target.
FIG. 7 is a diagram showing an example of pin-edge distance information generated by an information generating unit 164.
FIG. 8 is a diagram illustrating a method with which the information generating unit 164 generates the pin-edge distance information.
FIG. 9 is a diagram showing a relationship between a measurement target position and a green G.
FIG. 10 is a diagram showing another example of the relationship between the measurement target position and the green G.
FIG. 11 is a diagram illustrating an example of a reference position C.
FIG. 12 is a diagram showing an example of a screen displayed when a pin position of another hole is measured.
FIG. 13 is a flowchart showing processing in the distance measurement device 1.
FIG. 14 is a flowchart of a measurement process (S8).

### DETAILED DESCRIPTION OF THE INVENTION

### [Overview of a distance measurement device 1]

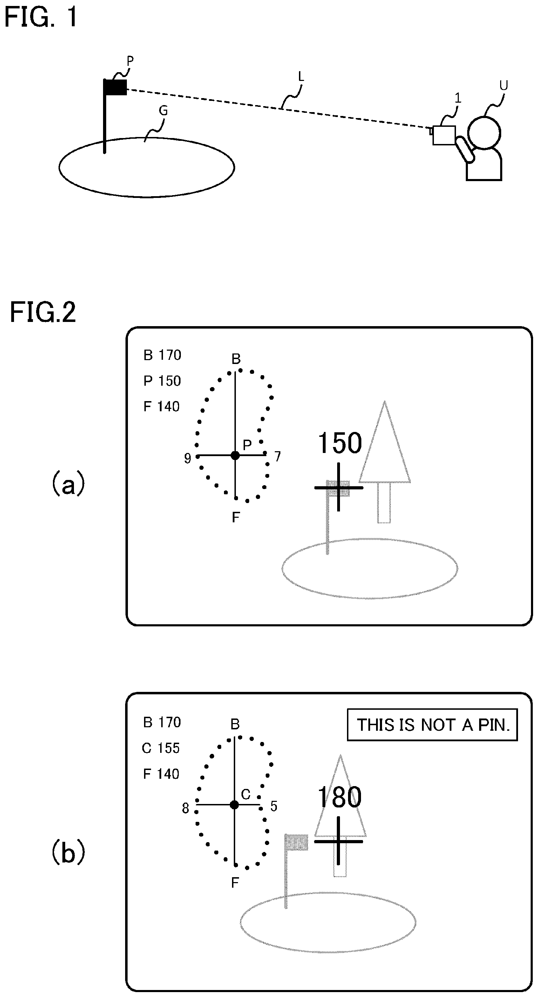

FIG. 1 is a diagram illustrating an overview of a distance measurement device 1. The distance measurement device 1 is designed for measuring distances in a golf course. For example, the distance measurement device 1 allows a user U, who is playing golf and uses the distance measurement device 1, to measure the distance to a pin P on a green G.

FIG. 1 shows a scenario where a pin flag P is installed on the green G, and the user U is measuring the distance to the pin flag P. When the user U initiates a distance measurement, the distance measurement device 1 emits a laser beam L and detects reflected light of the emitted laser beam L reflected at the pin P. The distance measurement device 1 measures the distance to the pin P on the basis of at least one of the following: (i) the time elapsed between the emission of the laser beam L and the detection of the reflected light, or (ii) the amount of phase change in the reflected light.

FIG. 2 is a diagram illustrating an example of a screen displayed on a display included in the distance measurement device 1. When the distance measurement ends, the user U can see a screen as shown in FIG. 2. FIG. 2(a) shows an example of a screen displaying that the laser beam L has hit the pin P and the distance from the position of the user U to the pin P is 150 yards. On the upper left of the screen, a diagram showing a relationship between the green G and the position of the pin P is displayed.

On the upper left of the screen, the distance from the current position of the user U to the back of the green G (B 170), the distance from the current position of the user U to the pin P (P150), and the distance from the current position of the user U to the front of the green G (F140) are also displayed. Furthermore, the distances from the position of the pin P to the left edge (9 yards) and to the right edge (7 yards) of the green G are also displayed. From these display contents, the user U can grasp the distance to the pin P and the position of the pin P on the green G.

When the user U measures the distance to the pin P using the distance measurement device 1, the laser beam may hit a tree or an artificial structure located near the direction of the pin P. In this case, if the distance from the position of the user U to the tree or artificial structure is displayed, the user U may mistakenly perceive this as the distance to the pin P. Therefore, the distance measurement device 1 is characterized by displaying a different screen depending on where the measured distance is to an object outside the range of the green G or to an object within the range of the green G. Specifically, the distance measurement device 1 displays the measurement result in different modes depending on whether or not an edge position, where a straight line connecting a reference position within the green G and a measurement target position, which is the position of the object hit by the laser beam, intersects with an edge line of the green G, lies between the reference position and the measurement target position.

FIG. 2(b) illustrates an example of a screen displaying a situation where a tree behind the pin P is hit by the laser beam. On this screen, it is displayed that the measured distance is 180 yards, accompanied by a warning indicating that the measured object is not the pin. Additionally, on the upper left of the screen, the distance (C155) to a center position of the green G, which is an example of the reference position stored in advance, is displayed, rather than the position of the pin P. By viewing this display, the user U can grasp that the distance to the pin P has not been measured and can perform re-measurement.

The reference position may be any position as long as it is inside the green G, but is preferably the center position, for example. The center position is, for instance, the midpoint of two points where a first straight line in a first direction (for example, the north-south direction) of the green G passes through and intersects the edge line of the green G, and the midpoint of two points where a second straight line orthogonal to the first direction intersects the edge line of the green G. By setting the reference position inside the green G, the probability of objects other than the pin P existing between the reference position and the edge line of the green G is reduced. Therefore, accuracy is enhanced compared to the conventional distance measurement device that determines whether or not the laser beam hits the pin P on the basis of whether the position hit by the laser beam lies between the frontmost and backmost positions of the green G.

The reference position is preferably set so that a straight line passing through the reference position intersects the edge line of the green G at only two points. Since the reference position is set as described above, the distance measurement device 1 can reliably determine that the laser beam has hit the object outside the green G when the edge position on the green G is located between the reference position and the measurement target position. Hereinafter, the configuration and operation of the distance measurement device 1 will be described in detail.

### [Configuration of the distance measurement device 1]

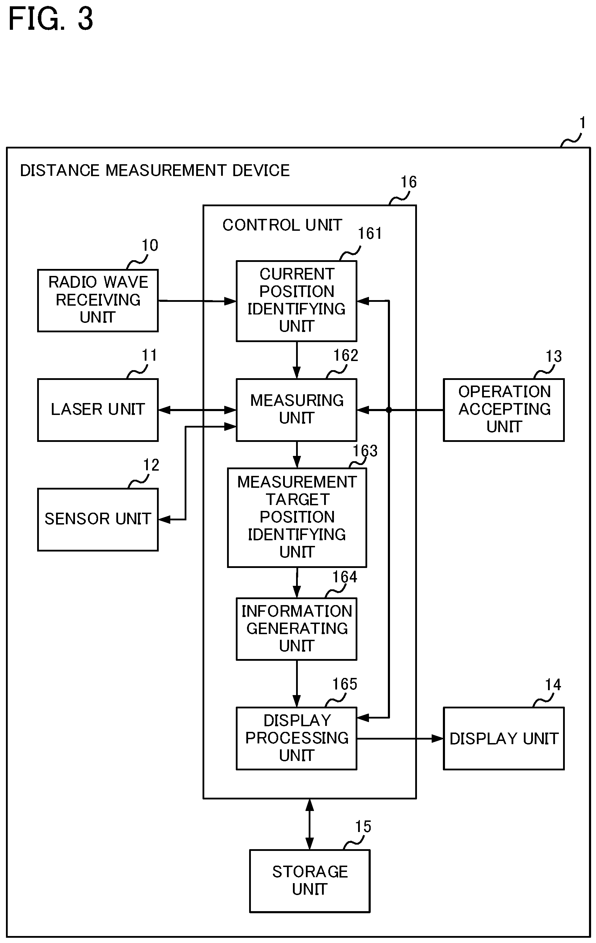

FIG. 3 is a diagram illustrating a configuration of the distance measurement device 1. The distance measurement device 1 includes a radio wave receiving unit 10, a laser unit 11, a sensor unit 12, an operation accepting unit 13, a display unit 14, a storage unit 15, and a control unit 16. The control unit 16 includes a current position identifying unit 161, a measuring unit 162, a measurement target position identifying unit 163, an information generating unit 164, and a display processing unit 165.

The radio wave receiving unit 10 receives radio waves from a positioning satellite such as a Global Positioning System (GPS) or a quasi-zenith satellite system. The radio wave receiving unit 10 inputs data included in the received radio waves to the current position identifying unit 161.

The laser unit 11 emits a laser beam under the control of the measuring unit 162. Additionally, the laser unit 11 receives a reflected laser beam, which is the emitted laser beam reflected off an object. For example, the laser unit 11 calculates a delay time from emission of the laser beam to reception of the reflected laser beam on the basis of a difference between a phase of the emitted laser beam and a phase of the received reflected laser beam. The laser unit 11 inputs the calculated delay time to the measuring unit 162.

The sensor unit 12 includes an azimuth sensor for detecting the orientation of the distance measurement device 1. The sensor unit 12 includes, for example, a three-axis acceleration sensor as the azimuth sensor. The sensor unit 12 may also include a geomagnetic sensor for detecting a direction in a horizontal plane as the azimuth sensor. The sensor unit 12 inputs azimuth data, which indicates azimuth detected by the azimuth sensor, to the measuring unit 162.

The operation accepting unit 13 includes a device for accepting the user U's operation. The operation accepting unit 13 includes, for example, an operation button or a touch panel. The operation accepting unit 13 inputs operation data indicating content of the input operation to the current position identifying unit 161, the measuring unit 162, and the display processing unit 165.

The display unit 14 is a display that displays various types of information. For example, as illustrated in FIG. 2, the display unit 14 displays information indicating the distance to the object that is hit by the laser beam and the distance to the green G.

The storage unit 15 includes a storage medium such as a read only memory (ROM) or a random access memory (RAM). The storage unit 15 stores programs to be executed by the control unit 16. In addition, the storage unit 15 stores various types of information used by the control unit 16 to calculate the distance to the pin P and determine whether the distance to the pin P has been correctly measured. These pieces of information may be, for example, information stored at the time of manufacturing the distance measurement device 1, or may be information transmitted from an external device via a communication interface (not illustrated).

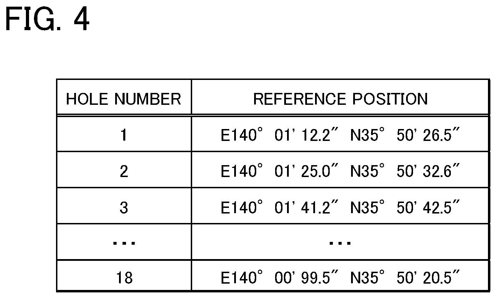

As one example, the storage unit 15 stores reference position information indicating a reference position (for example, a center position) for each green G of a golf course. FIG. 4 is a diagram illustrating an example of the reference position information. In the reference position information shown in FIG. 4, a hole number, which is an example of green identification information for identifying each green G, is associated with latitude and longitude information indicating the reference position.

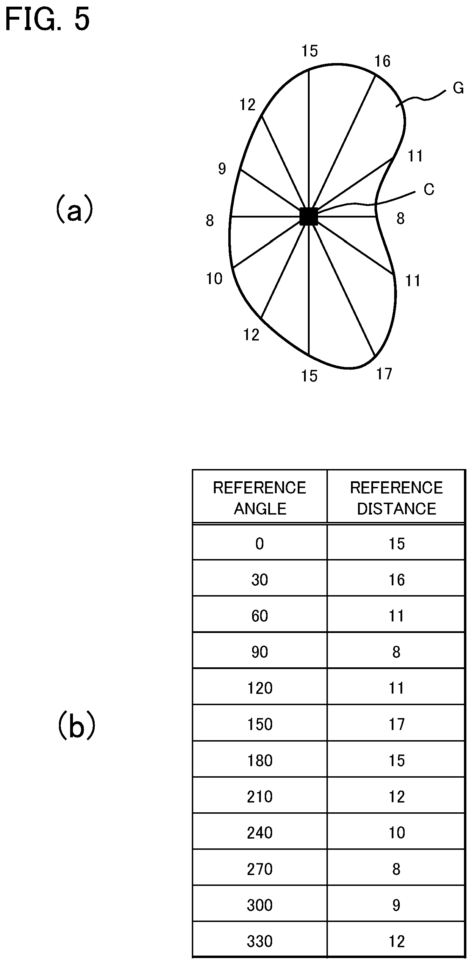

In addition, the storage unit 15 stores reference information indicating a reference position within the green G of the golf course and a plurality of edge positions on an edge of the green G. The reference information is, for example, information in which (i) a plurality of reference distances from the reference position within the green G of the golf course to the plurality of edge positions on the edge of the green G, and (ii) a plurality of reference angles, which are the angles formed between a reference direction and the directions connecting the reference position to each of the plurality of edge positions, are associated with each other. The reference information may be information including the latitude and longitude of the reference position and the latitude and longitude of the plurality of edge positions on the edge of the green G. FIG.5 is a diagram illustrating an example of the reference information.

FIG. 5(a) is a diagram illustrating the concept of reference information. In FIG. 5(a), the distances from a reference position C, indicated by a black square, of the green G to the edge of the green G (hereinafter, sometimes referred to as "reference distances") are shown at 30-degree intervals relative to the reference direction (for example, a northward direction). FIG. 5(b) shows an example of the reference information stored in the storage unit 15, where the reference angles and the reference distances are associated with each other in the reference information. In FIG. 5, the reference angles are defined at 30-degree intervals, but the interval between the reference angles is preferably narrower, for example, defined every 1 degree.

The storage unit 15 may store a plurality of pieces of reference information corresponding to a plurality of greens G. The storage unit 15 may store (i) the plurality of pieces of reference information and (ii) tee position information indicating the locations of teeing areas that correspond to the plurality of greens G, in association with hole numbers. The storage unit 15 may store hole range data indicating an area of each hole, in association with a hole number.

In addition, the storage unit 15 stores the position of the pin P identified by the control unit 16. The storage unit 15 stores the positions of the pins P in association with the hole numbers, for example. The storage unit 15 can update the position of the pin P under the control of the control unit 16.

The control unit 16 includes, for example, a Central Processing Unit (CPU). The control unit 16 functions as the current position identifying unit 161, the measuring unit 162, the measurement target position identifying unit 163, the information generating unit 164, and the display processing unit 165 by executing the programs stored in the storage unit 15.

The current position identifying unit 161 identifies the current position of the distance measurement device 1 on the basis of the data acquired from the radio wave receiving unit 10. The current position identifying unit 161 identifies the latitude and longitude of the current position of the distance measurement device 1, for example, on the basis of the data acquired from the radio wave receiving unit 10 when the operation accepting unit 13 accepts an operation for measuring a distance. The current position identifying unit 161 notifies the measuring unit 162 of the identified current position. The current position identifying unit 161 may identify the hole number of the hole the user U is playing on by identifying the hole that includes the current position. This is done by comparing the latitude and longitude of the current position with the latitude and longitude corresponding to each hole indicated by the hole range data.

When the operation accepting unit 13 accepts the operation for measuring the distance, the measuring unit 162 measures a distance from the current position of the distance measurement device 1 to the measurement target and the direction of the measurement target with respect to the current position. The measurement target is an object hit by the laser beam emitted by the laser unit 11. The measuring unit 162 calculates the distance from the current position of the distance measurement device 1 to the measurement target on the basis of the delay time input from the laser unit 11.

The measuring unit 162 measures the direction of the measurement target by identifying the direction in which the distance measurement device 1 faces, that is, the direction to which the distance measurement device 1 emits the laser beam, on the basis of the azimuth data input from the sensor unit 12. The direction of the measurement target is represented by an angle (0° to 259°) relative to the northward direction, for example. The measuring unit 162 notifies the measurement target position identifying unit 163 of the measured distance and direction.

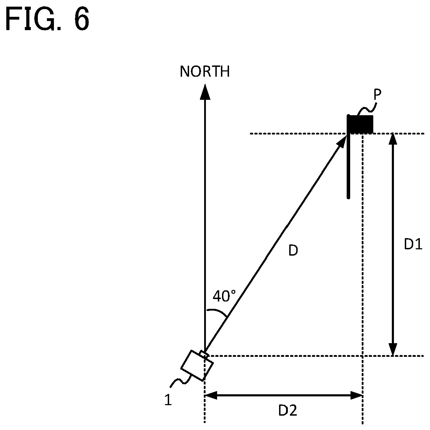

The measurement target position identifying unit 163 identifies the measurement target position, which is the position of the measurement target, on the basis of (i) the current position and (ii) the distance and direction measured by the measuring unit 162. FIG. 6 is a diagram for illustrating a method in which the measurement target position identifying unit 163 identifies the measurement target position.

When the distance to the pin P measured by the measuring unit 162 is D and the direction from the current position to the pin P is 40° relative to the northward direction, the distance between the distance measurement device 1 and the pin P in the north-south direction is D1, and the distance between the distance measurement device 1 and the pin P in the east-west direction is D2. The measurement target position identifying unit 163 identifies, as the measurement target position, the latitude and longitude of a position shifted by D1 in the north-south direction and shifted by D2 in the east-west direction, relative to the latitude and longitude of the current position of the distance measurement device 1. The measurement target position identifying unit 163 notifies the information generating unit 164 and the display processing unit 165 of the identified measurement target position.

The information generating unit 164 generates green information indicating a relationship between (i) the measurement target position, representing the position of the pin P, and (ii) the distance to the edge line of the green G. Specifically, the information generating unit 164 generates green information including pin-edge distance information on the basis of the reference information and the measurement target position. The pin-edge distance information reflects the association between (i) a plurality of edge distances from the measurement target position to the plurality of edge positions and (ii) a plurality of edge angles, which are angular differences between the reference direction and the directions connecting the measurement target position to each of the plurality of edge positions Although details will be described later, the information generating unit 164 calculates the edge distance and the edge angle using a positional relationship between the reference position and the measurement target position, the reference distances, and the reference angles, and then generates the pin-edge distance information.

The information generating unit 164 provides notification about the generated pin-edge distance information to the display processing unit 165. The information generating unit 164 may store the pin-edge distance information in the storage unit 15, thereby allowing the display processing unit 165 to read the pin-edge distance information from the storage unit 15.

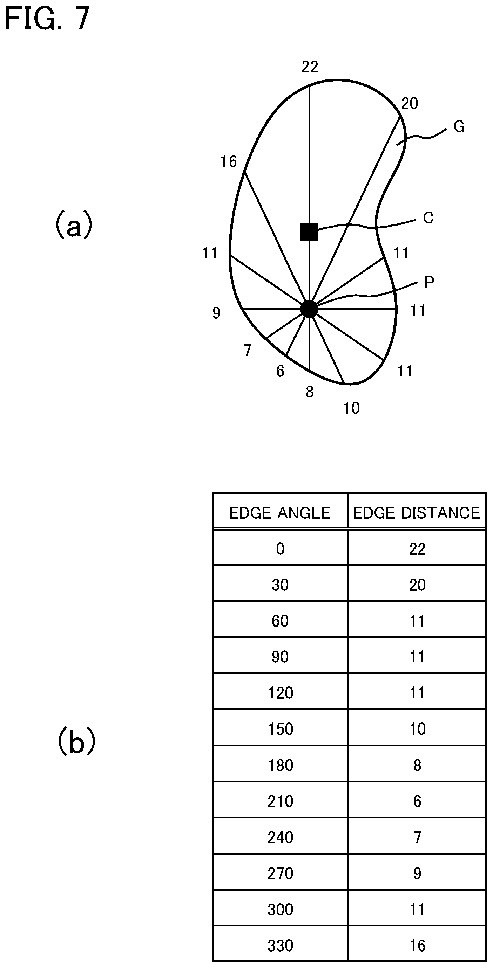

FIG. 7 is a diagram illustrating an example of the pin-edge distance information generated by the information generating unit 164. The pin-edge distance information shown in FIG. 7 is generated by the information generating unit 164 on the basis of the reference information shown in FIG. 5 and the pin position, which is the measurement target position identified by the measurement target position identifying unit 163.

FIG. 7(a) shows the distances from the pin position P, indicated by a black circle, on the green G to the edge of the green G at 30-degree intervals relative to the reference direction. The black square shown in FIG. 7(a) represents the reference position C shown in FIG. 5(a). FIG. 7(b) shows an example of the pin-edge distance information generated by the information generating unit 164, in which the edge angles and the edge distances are associated with each other. In FIG. 7, the reference angles are determined at 30-degree intervals, but the interval between the edge angles is preferably narrower, for example, defined every 1 degree.

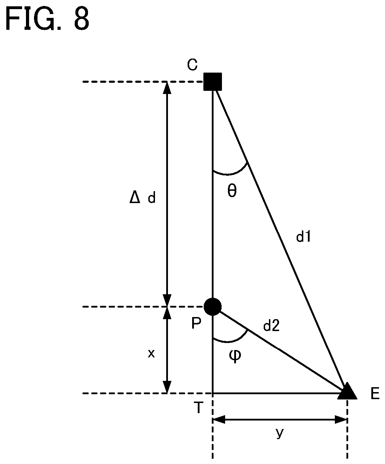

FIG. 8 is a diagram illustrating a method with which the information generating unit 164 generates the pin-edge distance information. In FIG. 8, a black square represents the reference position C, a black circle represents the pin position P, and a black triangle represents an example of an edge position E. The distance between the reference position C and the edge position E in FIG. 8 is denoted as d1.

The information generating unit 164 calculates a distance Δd between the reference position C and the pin position P on the basis of a relationship between the latitude and longitude of the reference position C and the latitude and longitude of the pin position P. Furthermore, the information generating unit 164 calculates an angle θ formed between (i) the direction of a straight line connecting the reference position C and the edge position E and (ii) the direction of a straight line connecting the pin position P and the edge position E. This calculation is performed on the basis of relationships between (i) the latitude and longitude of the reference position C and the latitude and longitude of the edge position E, and (ii) the latitude and longitude of the pin position P and the latitude and longitude of the edge position E.

When the intersection point of an extension line of the straight line connecting the reference position C and the pin position P and a straight line orthogonal to the extension line and passing through the edge position E is T, a distance from C to T, Δd + x, is calculated as d1 × cos θ. The information generating unit 164 calculates a distance from P to T, x, by subtracting Δd from Δd + x. Further, the information generating unit 164 calculates a distance from T to E, y, as d1 × sin θ. Then, the information generating unit 164 calculates the distance between the pin position and the edge position as d2 = √(x² + y²).

Further, the information generating unit 164 calculates an angle φ formed between PT and PE using Arctan(y/x). The angle φ represents an edge angle of the edge position E corresponding to the reference angle θ.

The information generating unit 164 calculates the edge distances corresponding to all of the edge angles by performing the above calculations for all of the reference angles included in the reference information, and generates the pin-edge distance information as shown in FIG. 7(b). The information generating unit 164 stores the generated pin-edge distance information in the storage unit 15.

It should be noted that since the reference angle θ is different from the edge angle φ, the edge angle φ corresponding to the reference angle θ does not necessarily change by 1 degree, even if the reference angle θ changes by 1 degree. Therefore, the interval between the reference angles may be smaller than the interval between the edge angles (for example, 1 degree). In addition, the information generating unit 164 may interpolate positions between the plurality of edge positions corresponding to the plurality of reference angles to calculate an edge position corresponding to an edge angle at a predetermined interval centering on the pin position, and may calculate a distance between the calculated edge position and the pin position.

The information generating unit 164 may generate the pin-edge distance information on the basis of the measurement target position, provided that the object hit by the laser beam is the pin P. For example, the information generating unit 164 generates the pin-edge distance information on the basis of the pin position information where the distance from the reference position to the pin position is smaller than the distance from the reference position to the plurality of edge positions. When the distance from the reference position to the pin position exceeds the distance from the reference position to the plurality of edge positions, the pin position is outside the green G. In this case, the information generating unit 164 does not generate the pin-edge distance information. Having the information generating unit 164 operates in this manner prevents the generation of inappropriate pin-edge distance information on the basis of a measurement target position different from the position of the pin P.

The display processing unit 165 causes the display unit 14 to display various types of information. For example, as illustrated in FIG. 2, the display processing unit 165 causes the display unit 14 to display at least one of (i) the distance to the object hit by the laser beam emitted by the laser unit 11 or (ii) an image indicating the position of the pin P on the green G. When the measurement target position is within a predetermined range corresponding to the reference position (for example, when the measurement target position is inside the edge line of the green G), the display processing unit 165 causes the display unit 14 to display the measurement target position and the edge line of the green G as illustrated in FIG. 2(a). In this case, the display processing unit 165 causes the display unit 14 to display the measurement target position as the position of the pin P. The predetermined range may be a slightly wider range or a slightly narrower range than the range of the green G.

Specifically, as illustrated in FIG. 2(a), the display processing unit 165 causes the display unit 14 to display the measurement target position as the pin position on the green G together with the plurality of edge positions. The display processing unit 165 may display the plurality of edge positions by a curved line connecting the plurality of edge positions. Furthermore, the display processing unit 165 may cause the display unit 14 to display a distance from the current position to the measurement target position and a distance to the edge position where a straight line connecting the current position and the measurement target position intersects the edge line of the green G.

When the measurement target position is not within the predetermined range corresponding to the reference position, as illustrated in FIG. 2(b), the display processing unit 165 causes the display unit 14 to display the reference position (for example, the center position) and the edge line of the green G. When the measurement target position is not within the predetermined range, the display processing unit 165 may cause the display unit 14 to display the reference position as the pin position. At this time, the display processing unit 165 may cause the display unit 14 to display text indicating that the reference position is displayed as the pin position (for example, "Displaying the center position").

The display processing unit 165 may cause the display unit 14 to display the reference position and the edge line of the green G when the measurement target position identifying unit 163 has not identified the measurement target position. In this case, the display processing unit 165 may cause the display unit 14 to display the reference position as the pin position. The case where the measuring unit 162 does not identify the measurement target position is, for example, a case where the operation of measuring the distance has not yet been performed on the hole where the user U is playing and the measurement target position is not stored in the display unit 14.

The display processing unit 165 may cause the display unit 14 to display the reference position as the pin position when the current position is within a predetermined range from the location of the teeing area and the measuring unit 162 has not identified the measurement target position. The display processing unit 165 may cause the display unit 14 to display the distance from the current position to the reference position. When the current position is in a teeing area where the pin P cannot be seen or where the distance to the position of the pin P is greater than or equal to a predetermined distance (for example, 300 yards or more), the display processing unit 165 may cause the display unit 14 to display the reference position as the pin position. Since the display processing unit 165 operates in this manner, the user U can grasp the shape of the green G and the distance to the green G, even in teeing areas where the distance to the pin P cannot be measured.

When the measurement target position is outside the region defined by the plurality of edge positions identified by the reference information, the display processing unit 165 causes the display unit 14 to display information (for example, warning information) in a different mode than when the measurement target position is within the region. Specifically, the display processing unit 165 causes the display unit 14 to display information in a different mode depending on whether or not the measurement target position is the pin P within the green G.

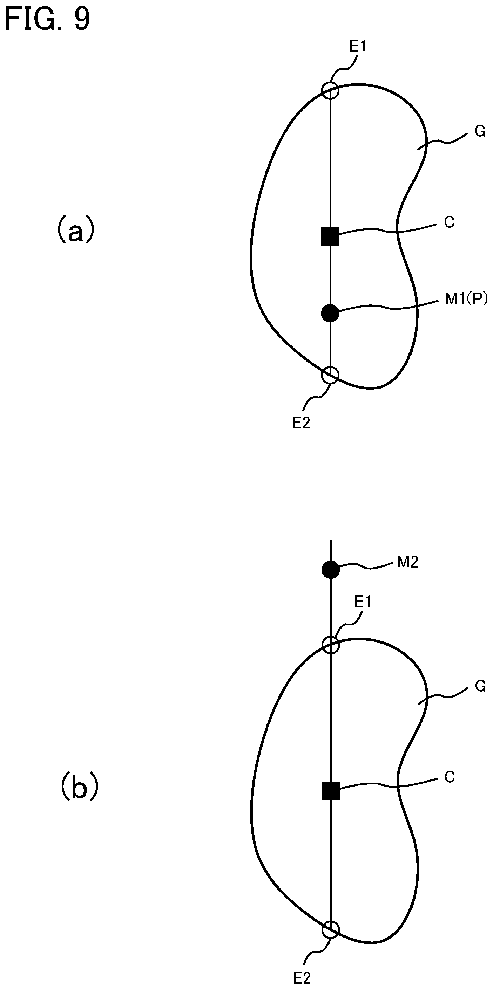

FIG. 9 is a diagram showing a relationship between a measurement target position and the green G. FIG. 9(a) shows the case where a measurement target position M1 is the position of the pin P within the green G. FIG. 9(b) shows the case where a measurement target position M2 is an object outside the green G (for example, a tree on the back side of the green G). The display processing unit 165 causes the display unit 14 to display information in a different mode depending on each of these cases.

When the laser beam emitted by the laser unit 11 hits the pin P within the green G, as shown in FIG. 9(a), the measurement target position M1 should lie between the reference position C and either edge position E1 or edge position E2 on a straight line connecting the reference position C and the measurement target position M1. Therefore, if the measurement target position lies between the reference position and at least one edge position (the edge position E2 in FIG. 9) on the straight line connecting the reference position and the measurement target position, the display processing unit 165 determines that the laser beam emitted by the laser unit 11 has hit the pin P and causes the display unit 14 to display the measurement target position as the pin position on the green G together with the plurality of edge positions.

On the other hand, when the laser beam emitted by the laser unit 11 hits an object outside the green G, as shown in FIG. 9(b), the measurement target position M2 measured by the measuring unit 162 does not lie between the reference position C and either edge position E1 or edge position E2 on a straight line connecting the reference position C and the measurement target position M2. In such a case, the distance from the distance measurement device 1 to the measurement target identified by the measurement target position identifying unit 163 is not the distance from the distance measurement device 1 to the pin P. Therefore, when the measurement target position is outside the green G, the display processing unit 165 causes the display unit 14 to display the measurement result in a mode different from that used when the measurement target position is inside the green G.

Specifically, the display processing unit 165 causes the display unit 14 to display the measurement result in a different mode depending on whether or not at least one edge position on the straight line connecting the reference position and the measurement target position lies between the reference position and the measurement target position. In other words, the display processing unit 165 causes the display unit 14 to display the measurement results in different modes depending on whether the distance between the reference position and the measurement target position exceeds the reference distances corresponding to the plurality of edge positions on the straight line connecting the reference position and the measurement target position.

In the example illustrated in FIG. 9(a), edge positions E1 and E2 are present on the straight line connecting the reference position C and the measurement target position M1. In a case where the reference position C is the center position of the green G, the display processing unit 165 determines that the measurement target position M1 is inside the green G if the distance between the reference position C and the measurement target position M1 is less than or equal to the distance between the reference position C and the edge position E1 and is less than or equal to the distance between the reference position C and the edge position E2. In the example illustrated in FIG. 9(b), since the distance between the reference position C and the measurement target position M2 exceeds at least the distance between the reference position C and the edge position E1, the display processing unit 165 determines that the measurement target position M2 is outside the green G. Then, the display processing unit 165 causes the display unit 14 to display the measurement results in different modes depending on whether the measurement target position is inside or outside the green G.

As a display example of the measurement results in different modes, when it is determined that the measurement target position is outside the green G, the display processing unit 165 causes the display unit 14 to display the warning indicating that the position of the pin has not been correctly measured, as shown in FIG. 2(b). The display processing unit 165 may display the distance to the measurement target position in green when it is determined that all the edge positions on the straight line connecting the reference position and the measurement target position do not lie between the reference position and the measurement target position and the measurement target position is inside the green G, and may display the distance to the measurement target position in red when it is determined that the measurement target position is outside the green G.

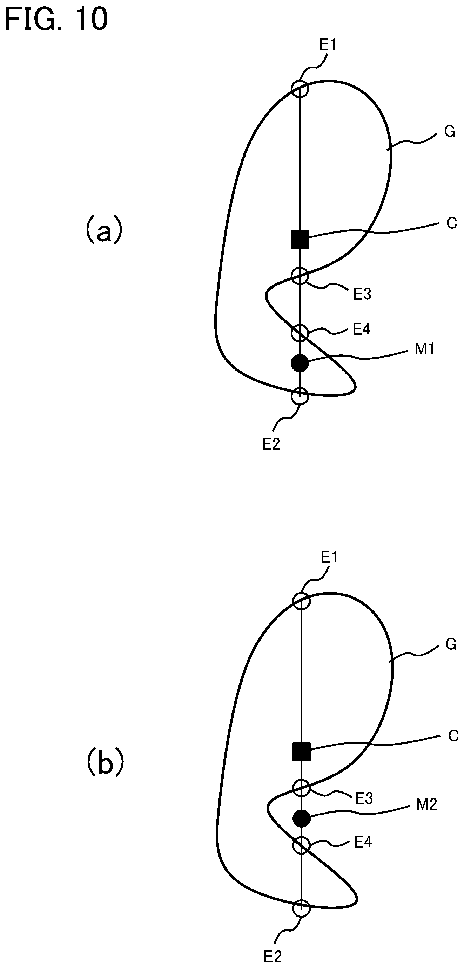

FIG. 10 is a diagram showing another example of the relationship between the measurement target position and the green G. When the edge line of the green G includes an inward curve, it is possible that, despite the measurement target position being outside the green G, the measurement target position lies between (i) at least one edge position on the straight line connecting the reference position and the measurement target position and (ii) the reference position. Therefore, when there are three or more edge positions on the straight line connecting the reference position and the measurement target position, the display processing unit 165 may cause the display unit to display the measurement results in different modes depending on whether the measurement target position lies between a first edge position, which is an odd-numbered position from the reference position, and a second edge position, which is an even-numbered position farther from the reference position than the first edge position.

In the example shown in FIG. 10(a), edge positions E1, E2, E3, and E4 are present on the straight line connecting the reference position C and the measurement target position M1. There is no measurement target position between the edge position E3 and the edge position E4, which are the first and second edge positions from the reference position C, respectively. The measurement target position M1 lies between the reference position C and the edge position E2. In this case, since the measurement target position M1 is within the green G, the display processing unit 165 determines that the position of the measurement target position M1 is the position of the pin P.

On the other hand, in the example shown in FIG. 10(b), the measurement target position M2 lies between the edge position E3 and the edge position E4, which are the first and second edge positions from the reference position C, respectively. In this case, since the measurement target position M2 is outside the green G, the display processing unit 165 determines that the position of the measurement target position M2 is not the position of the pin P. In this manner, the display processing unit 165 can correctly determine whether the laser beam emitted by the laser unit 11 hits the pin P, regardless of the shape of the green G.

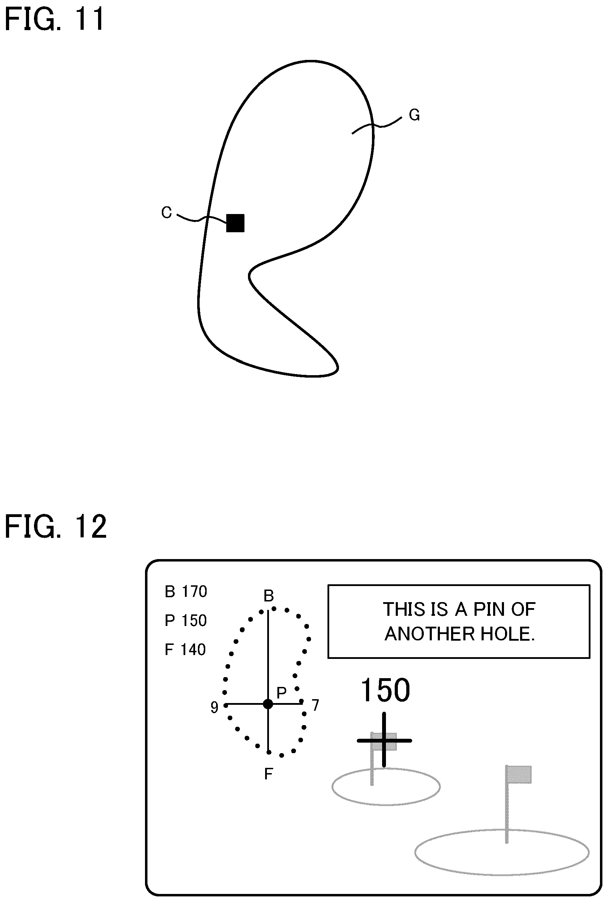

If the edge line of the green G includes the inward curve, as shown in FIG. 10, it is desirable to set the reference position so that the straight line passing through the reference position intersects the edge line of the green G at only two points. That is, it is desirable to set the reference position at a position where a straight line does not straddle the inward curve. FIG. 11 is a diagram illustrating an example of such a reference position C. Since the reference position is set in this manner, the display processing unit 165 can determine that the laser beam hits an object outside the green G when the edge position on the green G lies between the reference position and the measurement target position, even if the edge line of the green G includes the inward curve.

The display processing unit 165 stores the measurement target position in the storage unit 15 when the measurement target position is within a predetermined range (for example, inside the green G), and causes the display unit 14 to display the measurement target position as a pin position after storing the measurement target position in the storage unit 15. The display processing unit 165 may store the measurement target position in the storage unit 15 in association with the hole number. In this case, after storing the measurement target position in the storage unit 15, the display processing unit 165 may cause the display unit 14 to display the measurement target position corresponding to the hole number including the current position as the pin position, by referencing the hole range data.

Specifically, when the operation accepting unit 13 accepts a first operation for displaying the measured distance, the display processing unit 165 causes the display unit 14 to display the measurement target position stored in the storage unit 15 as the pin position. Since the display processing unit 165 operates in this manner, once the user U measures the position of the pin P for a hole, the user U does not need to re-measure the position of the pin P thereafter.

When the operation accepting unit 13 accepts a second operation for measuring the distance afresh, the display processing unit 165 causes the display unit 14 to display the measurement target position identified on the basis of a distance to the measurement target newly measured by the measuring unit 162 as the pin position. The measurement target position identifying unit 163 identifies the measurement target position on the basis of the current position of the distance measurement device 1 at the time the operation accepting unit 13 accepts the second operation, the direction of the distance measurement device 1, and the distance identified by the measuring unit 162 (i.e., the distance to the object hit by the laser beam). By having the measurement target position identifying unit 163 and the display processing unit 165 operate in this manner, the distance to the pin P can be grasped with greater accuracy by the user U when he/she approaches the green G.

When the measurement target position identified by the measurement target position identifying unit 163 is different from the measurement target position stored in the display unit 14, the display processing unit 165 may update the measurement target position stored in the display unit 14. The display processing unit 165 may update the measurement target position stored in the storage unit 15 on condition that the measurement target position identified by the measurement target position identifying unit 163 is within a predetermined range (for example, within the range of the green G) from the reference position when the operation accepting unit 13 accepts the second operation. By having the operation of the display processing unit 165 operate in this manner, it is possible to prevent the position of an object other than the pin P from being stored in the storage unit 15 as the position of the pin P when the laser beam hits said object.

When at least one edge position on the straight line connecting the reference position and the measurement target position lies between the reference position and the measurement target position, that is, when the laser beam hits an object outside the green G, the display processing unit 165 may cause the display unit 14 to display the measurement target position in a mode different from that of the pin position and may cause the display unit 14 to display the distance from the measurement target position to the edge position closest to the measurement target position. As an example, in a case where the measurement target position is a tree located on the back of the green G, the display processing unit 165 causes the display unit 14 to display the distance from the tree to the farthest back edge of the green G. By having the display processing unit 165 cause the display of such a distance, the user U can grasp how far a ball would go beyond the green G to reach the tree's position.

Since a golf course has multiple holes, reference information corresponding to each hole is stored in the storage unit 15. In order to determine whether the laser beam has hit the pin P, the display processing unit 165 needs to use the edge position included in the reference information for the hole the user U is playing on.

Therefore, when the current position is within the predetermined range from the location of the teeing area, the display processing unit 165 identifies the hole number corresponding to the teeing area as the current hole number, which is the hole number of the hole the user U is playing on. For example, the display processing unit 165 regards the hole that corresponds to the teeing area position closest to the current position, from among the positions of the plurality of teeing areas stored in the storage unit 15, as the hole the user U is playing on. The display processing unit 165 may identify the hole the user U is playing on by referencing data indicating the position of the region of each hole stored in the storage unit 15.

In a case where it is determined that the measurement target position is not present within the green G of the hole the user U is playing on but is present within the green G of another hole, the display processing unit 165 may cause the display unit 14 to display predetermined information indicating that the pin of another hole is being measured. The predetermined information is, for example, warning information indicating that the pin position of another hole is being measured, and it may be displayed using a color different from the one used when the pin position of the hole the user U is playing on is correctly measured.

FIG. 12 is a diagram showing an example of a screen displayed when the pin position of another hole is measured. As shown in FIG. 12, in a case where a measurement target position is not present within the region defined by the plurality of edge positions identified by the reference information corresponding to the current hole number, the display processing unit 165 causes the display unit 14 to display the information indicating that the pin position of another hole, different from the hole the user U is playing on, is being measured, for example. The display processing unit 165 may cause the display unit 14 to display predetermined information when the measurement target position is not present within the region defined by the plurality of edge positions identified by reference information corresponding to the reference position closest to the measurement target position among the plurality of reference positions corresponding to the plurality of pieces of reference information associated with the multiple holes.

The display processing unit 165 may reference the reference information corresponding to each hole number stored in the storage unit 15. If the reference position closest to the measurement target position does not correspond to the reference position corresponding to the current hole number, the display processing unit 165 may display predetermined information on the display unit 14. By having the display processing unit 165 operate in this manner, it is possible to prevent the user U from misunderstanding that the distance to the pin P has been appropriately measured, for example, even though the laser beam has hit the pin P on the green G of the adjacent hole.

In a case where noise is superposed on the radio waves received by the radio wave receiving unit 10, an error may occur in the current position identified by the current position identifying unit 161, possibly resulting in the hole the user U is playing on being misidentified. Additionally, as the user U moves through the hole he/she is playing on, the distance to the teeing area of an adjacent hole decreases, possibly leading to another situation where the hole he/she is playing on is misidentified. Therefore, after identifying the hole the user U is playing on, on the basis of the position of the teeing area, the display processing unit 165 may cause the display unit 14 to display a warning if it determines that the current position is in another hole before the user U comes within a predetermined distance from the green G of the identified hole. The display processing unit 165 may display the warning and may also cause the display unit 14 to display a screen for accepting input of the hole number.

### [Response to two greens]

In some golf courses, each hole may have multiple greens (e.g., two greens). For such golf courses, the storage unit 15 stores the reference information of each of a plurality of greens in association with the hole number. The display processing unit 165 determines, for each of the plurality of greens, whether at least one edge position on the straight line connecting the reference position and the measurement target position lies between the reference position and the measurement target position. The display processing unit 165 causes the display unit 14 to display the measurement results in different modes depending on whether all edge positions on the straight line connecting the reference position and the measurement target position in one of the plurality of greens lie between the reference position and the measurement target position.

Specifically, when the condition is satisfied that all edge positions on the straight line connecting the reference position of one of the plurality of greens and the measurement target position do not lie between the reference position and the measurement target position, the display processing unit 165 determines that the measurement target position is the pin position of the green satisfying this condition. If at least one edge position on each of a plurality of straight lines connecting the reference position of each of the two greens and the measurement target position lies between the reference position of each green and the measurement target position, the display processing unit 165 determines that the measurement target position is not the pin position, and for example, displays a warning. Since the display processing unit 165 operates in this manner, the user U can confirm whether the pin position has been correctly measured, even in a hole with two greens.

It should be noted that the control unit 16 may acquire information about a green in use on the day from the golf course's computer via a communication unit (not shown). The display processing unit 165 may then determine whether at least one edge position on the straight line connecting the reference position of the green in use and the measurement target position lies between the reference position and the measurement target position. Alternatively, the control unit 16 may acquire the information about the green in use on the day via the operation accepting unit 13.

### [Processing in the distance measurement device 1]

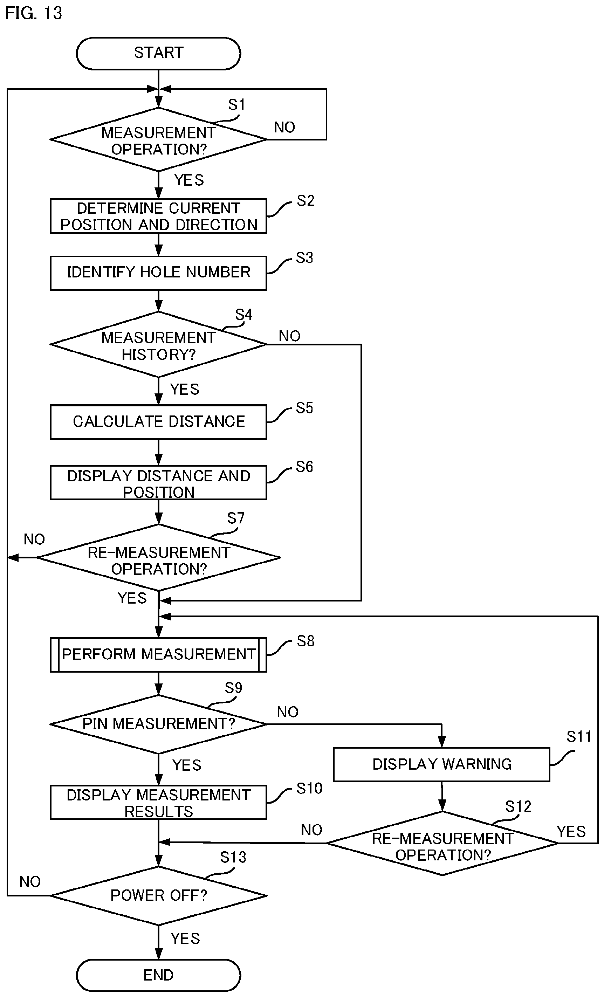

FIG. 13 is a flowchart illustrating processing in the distance measurement device 1. The flowchart of FIG. 13 starts from a standby state in which the distance measurement device 1 is powered on.

In the standby state, the control unit 16 monitors whether or not the operation accepting unit 13 has accepted an operation from the user U (S1). If the user U has performed an operation to measure the distance (YES in S1), the current position identifying unit 161 identifies the current position and direction of the distance measurement device 1 (S2). Furthermore, the current position identifying unit 161 identifies the hole number corresponding to the identified current position by referencing the hole range data (S3).

The display processing unit 165 determines whether a measurement history of the pin position is stored in association with the identified hole number (S4). If the measurement history is stored (YES in S4), the display processing unit 165 calculates the distance between (i) the pin position stored in association with the hole number and (ii) the current position (S5). The display processing unit 165 causes the display unit 14 to display the calculated distance to the pin P and the position of the pin P on the green G (S6).

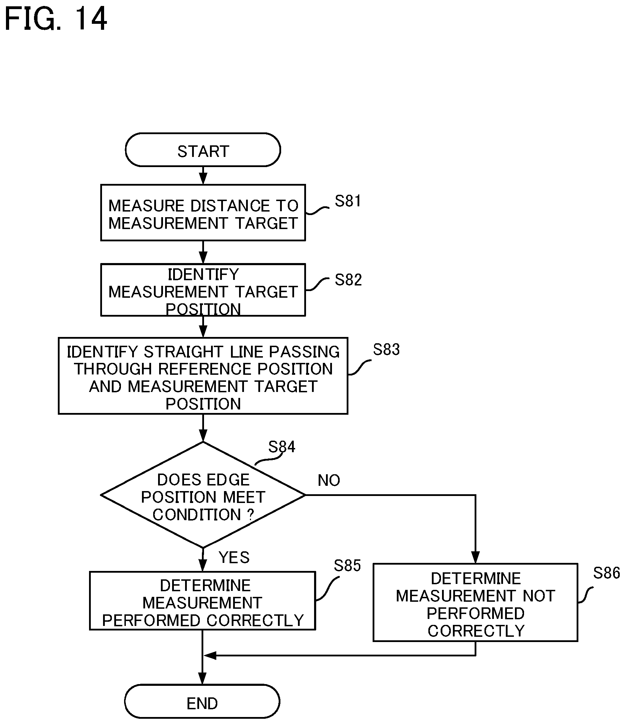

If the operation accepting unit 13 accepts an operation to re-measure the pin position (YES in S7), or if the measurement history is not stored (NO in S4), the measuring unit 162 causes the laser unit 11 to emit a laser beam and measures the distance to an object (S8). Details of a measurement process will be described later with reference to FIG. 14.

Next, the display processing unit 165 determines whether the measured object is the pin P (S9). If it is determined that the measurement target position is within the green G and the measured object is the pin P (YES in S9), the display processing unit 165 causes the display unit 14 to display the measurement result including the measured distance and the position of the pin P (S10).

If it is determined that the measurement target position is outside the green G and the measured object is not the pin P (NO in S9), the display processing unit 165 causes the display unit 14 to display a warning indicating that a pin has not been measured (S11). Here, if the operation accepting unit 13 accepts an operation to re-measure (YES in S12), the measuring unit 162 performs measurement again (S8).

The control unit 16 repeats the processes from S1 to S12 until the power of the distance measurement device 1 is turned off (NO in S13). The display processing unit 165 may turn off the display of the display unit 14 after a predetermined time (for example, 30 seconds) has passed since the operation, in order to reduce power consumption.

FIG. 14 is a flowchart of the measurement process (S8). The measuring unit 162 measures the distance to the measurement target by causing the laser unit 11 to emit the laser beam (S81). The measurement target position identifying unit 163 identifies the measurement target position on the basis of the measured distance, the current position of the distance measurement device 1, and the direction of the distance measurement device 1 (S82).

Next, the display processing unit 165 identifies a straight line passing through the reference position of the hole the user U is playing on and the measurement target position (S83), and determines whether the condition that at least one edge position on the straight line does not lie between the reference position and the measurement target position is satisfied (S84). If it is determined that the edge position does not lie between the reference position and the measurement target position (YES in S84), the display processing unit 165 determines that the position of the pin P has been measured correctly (S85). If it is determined that the edge position lies between the reference position and the measurement target position (NO in S84), the display processing unit 165 determines that the position of the pin P has not been measured correctly (S86).

### [Modification]

In the above description, the configuration in which the display processing unit 165 displays various types of information on the display unit 14 is exemplified. However, the display processing unit 165 may display various types of information on a display of the display unit 14. As an example, the distance measurement device may transmit and receive data to and from an information terminal (for example, a smartphone) via short-range wireless communication such as Bluetooth (registered trademark), and the display processing unit 165 may display a screen as shown in FIG. 2 on the user U's information terminal.

Furthermore, in the example shown in FIG. 2, the image indicating the position of the pin P on the green G is displayed on the display unit 14 together with the distance to the measurement target, but whether to display the image indicating the position of the pin P on the green G is optional. The display processing unit 165 may display only the distance to the measured object on the display unit 14. In this case, the display processing unit 165 may cause the user U's information terminal to display an image indicating the position of the pin P on the green G.

### [Effects of the distance measurement device 1]

As described above, the measurement target position identifying unit 163 identifies the measurement target position, which is the position of the measurement target, on the basis of the current position as well as the distance to and the direction of the measured object. When the measurement target position is within the green G, the display processing unit 165 determines that the measurement target position is the pin position, and causes the display unit 14 to display the pin position and the edge line of the green G. Since the distance measurement device 1 is configured in this manner, the distance measurement device 1 can display the pin position even when data indicating the pin position for the day cannot be obtained from the golf club's computer, allowing the user U to grasp the position of the pin P during play.

Furthermore, the display processing unit 165 causes the display unit 14 to display the measurement results in different modes depending on whether at least one edge position on the straight line connecting the reference position on the green G and the measurement target position lies between the reference position and the measurement target position. By having the display processing unit 165 operate in this manner, the accuracy of the distance measurement device 1 in determining whether the measured position is within the green G is improved. This allows the user U to grasp whether the distance to the pin P has been measured correctly.

The present disclosure is explained based on the exemplary embodiments. The technical scope of the present disclosure is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

### [Description of symbols]

1 Distance measurement device
10 Radio wave receiving unit
11 Laser unit
12 Sensor unit
13 Operation accepting unit
14 Display unit
15 Storage unit
16 Control unit
161 Current position identifying unit
162 Measuring unit
163 Measurement target position identifying unit
164 Information generating unit
165 Display processing unit

## Claims

1. A distance measurement device to be used in a golf course, comprising:
a storage unit that stores a reference position within a green of a golf course;
a current position identifying unit that identifies a current position of the distance measurement device;
a measuring unit that measures a distance from the current position to a measurement target and a direction of the measurement target with respect to the current position;
a measurement target position identifying unit that identifies a measurement target position, which is a position of the measurement target, on the basis of (i) the current position and (ii) the distance and the direction measured by the measuring unit; and
a display processing unit that causes a display unit to display the reference position and an edge line of the green when the measuring unit has not identified the measurement target position or when the measurement target position is not within a predetermined range corresponding to the reference position, and causes the display unit to display the measurement target position and the edge line of the green when the measurement target position is within the predetermined range corresponding to the reference position.

2. The distance measurement device according to claim 1, wherein
the display processing unit causes the display unit to display the reference position as a pin position when the measurement target position is not within the predetermined range, and causes the display unit to display the measurement target position as the pin position when the measurement target position is within the predetermined range.

3. The distance measurement device according to claim 1, wherein
the display processing unit causes the display unit to display a distance from the current position to the measurement target position and a distance to a position where a straight line connecting the current position and the measurement target position intersects an edge line of the green.

4. The distance measurement device according to claim 1, wherein
the storage unit further stores tee position information indicating locations of teeing areas of a plurality of greens, and
the display processing unit causes the display unit to display the reference position as a pin position when the current position is within a predetermined range from the location of the teeing area and the measuring unit has not identified the measurement target position.

5. The distance measurement device according to claim 1, wherein
the display processing unit stores the measurement target position in the storage unit when the measurement target position is within a predetermined range, and causes the display unit to display the measurement target position as a pin position after storing the measurement target position in the storage unit.

6. The distance measurement device according to claim 5, wherein
the storage unit stores hole range data indicating an area of each hole in association with a hole number, and
the display processing unit stores the measurement target position in the storage unit in association with the hole number, and causes the display unit to display the measurement target position corresponding to the hole number including the current position as a pin position after storing the measurement target position in the storage unit, by referencing the hole range data.

7. The distance measurement device according to claim 5, further comprising
an operation accepting unit that accepts a user's operation, wherein
the display processing unit causes the display unit to display the measurement target position stored in the storage unit as a pin position when the operation accepting unit accepts a first operation, and causes the display unit to display the measurement target position which is identified by the measurement target position identifying unit after the measuring unit is caused to perform the measurement, when the operation accepting unit accepts a second operation.

8. The distance measurement device according to claim 7, wherein
the display processing unit updates the measurement target position stored in the storage unit in a case where the measurement target position identified by the measurement target position identifying unit is within the predetermined range from the reference position, when the operation accepting unit accepts the second operation.

9. A program for causing a processor included in a distance measurement device to function as:
a current position identifying unit that identifies a current position of the distance measurement device;
a measuring unit that measures a distance from the current position to a measurement target and a direction of the measurement target with respect to the current position;
a measurement target position identifying unit that identifies a measurement target position, which is a position of the measurement target, on the basis of (i) the current position and (ii) the distance and the direction measured by the measuring unit; and
a display processing unit that causes a display unit to display the reference position and an edge line of the green when the measuring unit has not identified the measurement target position or when the measurement target position is not within a predetermined range corresponding to the reference position, and causes the display unit to display the measurement target position and the edge line of the green when the measurement target position is within the predetermined range corresponding to the reference position.
